# EUROPÄISCHE PATENTANMELDUNG

(11) **EP 4 644 952 A1**
(43) Veröffentlichungstag der Anmeldung: **05.11.2025**
(21) Anmeldenummer: 24173858.2
(22) Anmeldetag: 02.05.2024
(51) Int. Cl.: G01S 17/89, B66C 13/46, G01S 17/42

(54) **CONTAINERPRÜFSYSTEM, CONTAINERKRAN UND ENTSPRECHENDES VERFAHREN**

(71) Anmelder: SICK AG, 79183 Waldkirch (DE)
(72) Erfinder: WITTMEIER, Steffen, 79183 Waldkirch (DE); RUH, Dominic, 79102 Freiburg (DE)
(74) Vertreter: Manitz Finsterwald Patent- und Rechtsanwaltspartnerschaft mbB

(57) **Zusammenfassung**

Die vorliegende Erfindung betrifft ein Containerprüfsystem 100 zur Überprüfung des Zustands eines Frachtcontainers 1. Das Containerprüfsystem 100 umfasst eine Sensoreinheit 5, welche dazu ausgebildet ist, Sensordaten zur gesamten Unterseite eines Frachtcontainers 1 zu generieren, welcher in dem Überwachungsbereich der Sensoreinheit 5 vorgesehen ist und/oder welcher den Überwachungsbereich der Sensoreinheit 5 in einer vorgegebenen Bewegungsrichtung passiert. Ferner umfasst das Containerprüfsystem 100 eine Auswerteeinheit 7, welche dazu ausgebildet ist, anhand der generierten Sensordaten strukturelle Unstimmigkeiten der Unterseite des jeweiligen Frachtcontainers 1, insbesondere nicht entfernte Twist-Locks 9, zu identifizieren und ein entsprechendes Signal auszugeben. Die vorliegende Erfindung betrifft ferner einen Containerkran mit einem solchen Containerprüfsystem 100 sowie ein entsprechendes Verfahren zur Überprüfung von Frachtcontainern 1.

## Beschreibung

Die vorliegende Erfindung betrifft die Überprüfung des Zustands eines Frachtcontainers und insbesondere die Identifizierung von nicht entfernten Twist-Locks an solchen.

Entsprechende Containerprüfsysteme umfassen regelmäßig eine Sensoreinheit und eine Auswerteeinheit. Die Sensoreinheit ist dazu ausgebildet, Sensordaten zu einem Frachtcontainer, welcher sich innerhalb des Überwachungsbereichs der Sensoreinheit aufhält, zu generieren. Die Auswerteeinheit ist dazu ausgebildet, aus den so generierten Sensordaten spezifische Informationen zu dem Frachtcontainer zu extrahieren.

Solche Informationen können beispielsweise eine Form und/oder die Abmessungen des Frachtcontainers umfassen. Regelmäßig wird der Frachtcontainer durch das Containerprüfsystem auch im Hinblick auf Verformungen und/oder Unstimmigkeiten an den Außenwänden des Frachtcontainers hin untersucht. Dafür ist es bekannt, wenigstens zwei optische 2D-Abstandssensoren vorzusehen, welche einander gegenüberliegen angeordnet sind und eine horizontale Überwachungsebene bilden, durch welche der Frachtcontainer vertikal zu bewegen ist.

Verformungen und/oder Erhebungen an einer Unterseite des jeweiligen Frachtcontainers, insbesondere in Gestalt von nicht entfernten Twist-Locks, können damit aber nicht oder nur unzuverlässig bestimmt werden.

Es ist daher eine der vorliegenden Erfindung zugrundeliegende Aufgabe, einen Weg aufzuzeigen, die bekannten Vorrichtungen und Verfahren dahingehend weiterzuentwickeln, dass nicht entfernte Twist-Locks zuverlässig und effizient identifiziert werden können.

Diese Aufgabe wird durch ein Containerprüfsystem gemäß Anspruch 1 gelöst. Vorteilhafte Weiterbildungen sind den weiteren Ansprüchen zu entnehmen.

Erfindungsgemäß zeichnet sich das Containerprüfsystem dadurch aus, dass die Sensoreinheit dazu ausgebildet ist, Sensordaten zur gesamten Unterseite eines Frachtcontainers zu generieren, während sich dieser in dem Überwachungsbereich der Sensoreinheit befindet ist und/oder während dieser den Überwachungsbereich der Sensoreinheit in einer vorgegebenen Bewegungsrichtung passiert. Die Auswerteeinheit ist dazu ausgebildet, anhand der generierten Sensordaten strukturelle Unstimmigkeiten der Unterseite des jeweiligen Frachtcontainers, insbesondere nicht entfernte Twist-Locks, zu identifizieren und ein entsprechendes Signal auszugeben.

Im Vergleich zu herkömmlichen Containerprüfsystemen wird erfindungsgemäß tatsächlich die gesamte Unterseite des Frachtcontainers, gescannt, anstatt nur quer zu dieser den Frachtcontainer zu scannen. Dies kann je nach konkreter Ausgestaltung der Sensoreinheit sowohl statisch, also bei unbewegtem Frachtcontainer, als auch dynamisch, also bei bewegtem Frachtcontainer, erfolgen. Der erhaltene Scan der gesamten Unterseite des Frachtcontainers ermöglicht es, nicht nur das Vorhandensein, sondern auch die konkrete räumliche Ausgestaltung von Vorsprüngen oder Erhebungen (insbesondere auch deren Ausdehnung entlang der Unterseite des Frachtcontainers) zu analysieren und einzuordnen. Dies ermöglicht eine genaue und zuverlässige Bewertung entsprechender Unstimmigkeiten und eine geeignete Reaktion auf diese. Beispielsweise ist es durch die Analyse der räumlichen Ausdehnung erkannter Erhebungen entlang der Unterseite möglich, tatsächlich nicht entfernte Twist-Locks von Messrauschen, Messfehlern und/oder großflächigen Verformungen der Unterseite des Frachtcontainers zu unterscheiden und ein entsprechendes Signal auszugeben. Je nach konkreter Ausgestaltung der Sensoreinheit ist dies mit weniger Sensoren möglich, als bei herkömmlichen Prüfsystemen vorgesehen werden müssen.

Bevorzugt umfasst die Sensoreinheit wenigstens, insbesondere genau, einen 2D-Scanner, beispielsweise einen 2D-LiDAR-Sensor. Der ebene Überwachungsbereich des besagten 2D-Scanners ist in einem Winkel kleiner 90° auf die erwartete Normale der Unterseite des Frachtcontainers beim Passieren des Überwachungsbereichs ausgerichtet. Die Auswerteeinheit ist dazu ausgebildet, die Bewegung des Frachtcontainers beim Passieren des Überwachungsbereichs des 2D-Scanners zu überwachen und aus den jeweiligen Einzelmessungen oder Mehrlagenmessungen bzw. kombinierten Sensordaten (wie unten erläutert) während dem Passieren des Überwachungsbereichs die Gestalt der Unterseite des jeweiligen Frachtcontainers zu rekonstruieren.

Dies ist eine Ausgestaltung zum dynamischen Scannen der Unterseite des Frachtcontainers, während dieser den Überwachungsbereich eines schräg ausgerichteten 2D-Scanners passiert. Durch die Kombination aus Schrägstellung der Sensoreinheit und Bewegung des Frachtcontainers reicht bereits ein einzelner Laserscanner zur Abbildung der gesamten Unterseite des Frachtcontainers. Zur Auswertung müssen dann die Sensordaten des gesamten Durchlaufs der Unterseite durch den Überwachungsbereich gesammelt und miteinander in Bezug gesetzt werden. Hierfür ist es von Vorteil, über eine separate Bewegungsüberwachungseinheit Positions- und/oder Bewegungsinformationen zu dem jeweiligen Frachtcontainer zu beziehen. Die kombinierten Sensordaten ermöglichen schließlich die Rekonstruktion und Analyse der Unterseite des entsprechenden Frachtcontainers.

Bevorzugt umfasst die Sensoreinheit wenigstens, insbesondere genau, einen 3D-Scanner, insbesondere einen 3D-LiDAR-Sensor oder einen 4D-FMCW-LiDAR-Sensor. Die Auswerteeinheit ist dazu ausgebildet, aus wenigstens, insbesondere genau, einem Scan der Unterseite des Frachtcontainers die Gestalt der Unterseite des jeweiligen Frachtcontainers zu ermitteln.

Konkret erlaubt ein 3D-Scanner die Vermessung der Unterseite eines unbewegten Frachtcontainers innerhalb des Überwachungsbereichs des jeweiligen Sensors. Anstatt den Erfassungsbereich eines 2D Scanners durch die Bewegung des Frachtcontainers selbst zu erweitern, kann mit einem 3D Scanner die gesamte Unterseite des Containers in einer einzigen Messung erfasst werden. Dies erleichtert die Auswertung und ermöglicht schließlich eine genauere Abbildung und Analyse der Unterseite des Frachtcontainers. Alternativ oder zusätzlich können auch mehrere zeitlich aufeinander folgende 3D-LiDAR-Scans oder 4D-FMCW-LiDAR-Scans mit den Positions- und/oder Bewegungsinformationen zu dem jeweiligen Frachtcontainer kombiniert werden, um eine deutlich höhere räumliche Auflösung zu erreichen und somit die Überprüfung des Zustands eines Frachtcontainers und insbesondere die Identifizierung von nicht entfernten Twist-Locks zu verbessern. Zur umfassenden Abbildung der Unterseite des Frachtcontainers in einem einzigen Scandurchlauf muss sich der jeweilige 3D-Scanner während des Scandurchlaufs in einer geeigneten Positionierung und Ausrichtung unterhalb des Frachtcontainers befinden und auf diese (also, insbesondere schräg, nach oben) ausgerichtet sein. Das Sichtfeld des Scanners kann dabei die gesamte Unterseite des Frachtcontainers umfassen, zumindest aber wenigstens eine der Ecken des Frachtcontainers.

Bevorzugt ist die Auswerteeinheit mit einer Bewegungsüberwachungseinheit, welche Positions- und/oder Bewegungsinformationen zu dem jeweiligen Frachtcontainer ausgibt, gekoppelt oder zumindest koppelbar. Die Auswerteeinheit ist dazu ausgebildet, die so erhaltenen Positions- und/oder Bewegungsinformationen bei der Auswertung der Sensordaten zu berücksichtigen.

Derartige Positions- und/oder Sensordaten erleichtern die Auswertung der Sensordaten erheblich, insbesondere bei der Verwendung von 2D-Scannern. Unter Ausnutzung mehrerer zeitlich aufeinanderfolgender Scans eines 3D-Scanners oder eines 4D-FMCW-LiDARs, insbesondere unter Nutzung der Radialgeschwindigkeitsmessung" können die Positions- und/oder Sensordaten plausibilisiert werden.

Bevorzugt umfasst die Sensoreinheit wenigstens, insbesondere genau, einen 2D- oder 3D-Abstandssensor und ist die Auswerteeinheit dazu ausgebildet, aus den Sensordaten der Sensoreinheit eine 3D-Punktewolke zu erzeugen, welche die dreidimensionale Ausgestaltung zumindest der Unterseite des jeweiligen Frachtcontainers abbildet.

Eine derartige 3D-Punktwolke ist aus Sensordaten relativ einfacher und günstiger Sensoren zu erhalten und eignet sich hervorragend als Grundlage zur weiteren Analyse. Bei einer Bewegung des Frachtcontainers während des Scanvorgangs (sei es nun mit einem 2D- oder einem 3D-Sensor) bedarf die Bildung der besagten 3D-Punktwolke eine zeitliche Verrechnung der einzelnen Messwerte. Geeignete Verfahren hierfür sind jedoch wohlbekannt und deutlich zu vereinfachen, wenn bestimmte Randbedingungen, wie beispielsweise die Ausrichtung der Sensoreinheit und/oder die Richtung der Bewegung des Frachtcontainers beim Passieren des Überwachungsbereichs, gegeben sind.

Bevorzugt ist die Auswerteeinheit dazu ausgebildet, aus den Sensordaten zur Unterseite des jeweiligen Frachtcontainers die Erstreckungsebene der Bodenfläche des jeweiligen Frachtcontainers zu ermitteln.

Als Bodenfläche wird vorliegend diejenige Wand des im Allgemeinen quaderförmigen Frachtcontainers verstanden, auf welche dieser abgestellt werden soll. Im Allgemeinen ist diese sowohl beim Transport als auch beim Verfrachten vertikal nach unten ausgerichtet. Erhebungen und/oder Vorsprünge, beispielsweise durch Dreckklumpen oder insbesondere durch nicht entfernte Twist-Locks sind im vorliegenden Verständnis nicht als Teil der Bodenfläche des Frachtcontainers zu verstehen. Es sei jedoch darauf hingewiesen, dass die Bodenfläche nicht notwendigerweise eben sein muss, sondern regelmäßig eine spezielle Struktur aufweist. Die Erstreckungsebene der Bodenfläche zeigt die im Allgemeinen horizontale Ausdehnung dieser Struktur an.

Bevorzugt ist die Auswerteeinheit dazu ausgebildet, bei der Ermittlung der Erstreckungsebene der Bodenfläche lediglich einen Teil der Sensordaten zur Unterseite des jeweiligen Frachtcontainers, insbesondere ohne Sensordaten zu einem Randbereich der Unterseite des Frachtcontainers, bevorzugt zumindest ohne die Ecken der Unterseite des Frachtcontainers, zu berücksichtigen.

Hierdurch ist es möglich, unerwünschte Randeffekte, wie abgeschrägte Außenkanten und/oder nicht entfernte Twist-Locks in den Ecken, bei der Ermittlung der Erstreckungsebene der Bodenfläche nicht zu berücksichtigen und damit einen besseren Bezugspunkt für die nachfolgende Identifizierung und Analyse von Unregelmäßigkeiten zu erhalten.

Bevorzugt ist die Auswerteeinheit dazu ausgebildet, die Erstreckungsebene der Bodenfläche über einen Aufhängepunkt und eine Flächennormale zu definieren. Die Auswerteeinheit ist insbesondere dazu ausgebildet, als Flächennormale die Vertikale als erwartete Absetz- und/oder Anheberichtung und als Aufhängepunkt lediglich den Mittelwert einer relativen Höhe der Bodenfläche zu verwenden. Der Aufhängepunkt kann insbesondere auch als Aufpunkt bezeichnet werden.

Eine derartige Definition ist besonders einfach auszuwerten und eignet sich besonders zur Identifizierung von nicht entfernten Twist-Locks, welche sich üblicherweise vertikal nach unten von der im Normalfall weitestgehend horizontal verlaufenden Bodenfläche erstrecken. Dies ermöglicht unter üblichen Bedingungen eine schnelle und ausreichend genaue Analyse der Unterseite des Frachtcontainers. Diese Ausgestaltung ist bevorzugt mit einer Überwachungs- und/oder Verifizierungseinheit ergänzt, welche dazu ausgebildet ist, zu überprüfen bzw. zu verifizieren, dass auch tatsächlich übliche Bedingungen vorherrschen, sodass die genannten Annahmen anwendbar sind. Beispielsweise könnten Signale einer Bewegungsüberwachungseinheit für den Frachtcontainer auf Abweichungen von der Norm hin überprüft werden. Große Schwankungen bei der Ausgabe eines Encoders einer Hub- und Senkeinrichtung als Bewegungsüberwachungseinheit eines entsprechenden Krans könnten beispielsweise auf ein starkes Schwanken des Frachtcontainers hinweisen und damit die Annahme der vertikalen Ausrichtung der Bodenfläche als nicht anwendbar kennzeichnen.

Bevorzugt ist die Auswerteeinheit ferner dazu ausgebildet, Unebenheiten, insbesondere lokal begrenzte Erhebungen, an der Unterseite des jeweiligen Frachtcontainers zu identifizieren und ein entsprechendes Signal auszugeben. Ein entsprechendes Signal wird bevorzugt lediglich ausgegeben, wenn die Dimensionen der identifizierten Erhebungen ein festgelegtes Ausmaß in Bezug auf eine oder die identifizierte Erstreckungsebene der Bodenfläche des jeweiligen Frachtcontainers überschreiten.

Dies ermöglicht beispielsweise die zuverlässige Bestimmung des Vorhandenseins von nicht entfernten Twist-Locks und die Ausgabe eines entsprechenden Signals, beispielsweise umfassend ein Warnsignal und/oder eine Steuersignal, insbesondere zum Stoppen eines Verladevorgangs des Frachtcontainers.

Bevorzugt ist die Auswerteeinheit dazu ausgebildet, lediglich einen oder mehrere bestimmte Bereiche der Unterseite des jeweiligen Frachtcontainers, insbesondere den Randbereich der Unterseite des Frachtcontainers, bevorzugt lediglich die Ecken der Unterseite des jeweiligen Frachtcontainers, auf entsprechende Vorsprünge hin zu untersuchen.

Hierdurch wird der Fokus der Analyse auf bestimmte Bereiche der Unterseite des Frachtcontainers gelegt. Dies erlaubt es, Rechenleistung einzusparen und die Zahl von Fehlmeldungen zu reduzieren, falls lediglich bestimmte Unstimmigkeiten zu identifizieren sind. Nicht entfernte Twist-Locks sind beispielsweise nämlich lediglich in den Ecken der Unterseite möglich, wenn nur dort entsprechende Aufnahmen vorgesehen sind. Falls bereits bei der Ermittlung der Erstreckungsebene der Bodenfläche nur Sensordaten zu bestimmten Bereichen der Unterseite berücksichtigt wurden, versteht es sich, dass die nun bestimmten Bereiche von diesen verschieden sein sollten. Die jeweiligen Bereiche zur Ermittlung der Erstreckungsebene der Bodenfläche und die nun betrachteten Bereiche können sich wohl überschneiden, tun dies bevorzugt jedoch nicht.

Bevorzugt ist die Auswerteeinheit dazu ausgebildet, ein statistisches Maß, insbesondere die Standardabweichung, der Sensordaten zur Unterseite des jeweiligen Frachtcontainers in Bezug auf die Erstreckungsebene der Bodenfläche des jeweiligen Frachtcontainers zu ermitteln. Als Schwellenwert für die Auslösung des Signals wird durch die Auswerteeinheit bevorzugt ein Vielfaches, insbesondere das 3-Fache bis 20-Fache, bevorzugt das 5-Fache, das 10-Fache oder das 15-Fache, dieser Standardabweichung verwendet.

Anschaulich gesprochen wird der Mittelwert der Höhenkoordinate aus einem Satz von Messpunkten, welche einen zentralen Bereich der Unterseite des jeweiligen Frachtcontainers abdecken, als Aufhängepunkt der Erstreckungsebene verwendet. Über die Vertikale als erwartete Absetzrichtung oder dem gemittelten Kreuzprodukt wird aus dem Satz von Messpunkten die horizontal verlaufend angenommene Erstreckungsebene der Bodenfläche des Frachtcontainers bestimmt. Die Standardabweichung der Höhenkoordinaten der verwendeten Messpunkte von dem so ermittelten Mittelwert dient als Grundlage zur Definition eines Schwellenwerts, unterhalb dessen Abweichungen der Höhenkoordinate eines Messpunkts von dem Mittelwert als unwesentlich eingestuft wird. Dies ist besonders bei Frachtcontainern mit einer unebenen, beispielsweise einer gerillten, Unterseite von Relevanz, um eine fehlerhafte Analyse der Unterseite zu vermeiden. Der zur Bildung des Schwellenwerts konkret verwendete Faktor kann beispielsweise empirisch ermittelt werden oder in Abhängigkeit von separaten Messwerten, wie beispielsweise zu einer Oberflächenbeschaffenheit des jeweiligen Frachtcontainers, erfolgen.

Bevorzugt ist die Auswerteeinheit dazu ausgebildet, als Schwellenwert für die Auslösung des Signals einen festgelegten Wert zu verwenden, welcher systembedingt oder empirisch zur Identifizierung spezieller Erhebungen, insbesondere in Gestalt von nicht entfernten Twist-Locks, ermittelt wurden.

Ein fester Schwellenwert ist von der konkreten Ausgestaltung und Ausrichtung eines Frachtcontainers unabhängig und ist dementsprechend nicht von Fehlern bei der Ermittlung der Sensordaten abhängig. Er muss aber natürlich derart groß gewählt werden, dass zu erwartende statistische Variationen keine Auslösung des Signals bewirken, während er niedrig genug gewählt werden muss, um beispielsweise beim Vorhandensein von Twist-Locks zuverlässig ein entsprechendes Signal auszulösen.

Bevorzugt ist die Auswerteeinheit dazu ausgebildet, bei der Überprüfung des jeweiligen Frachtcontainers auf Informationen zurückzugreifen, welche die zu erwartenden Formen und/oder Dimensionen des jeweiligen Frachtcontainers anzeigen.

Entsprechende Informationen können beispielsweise aus einer Datenbank mit üblichen Formen und/oder Dimensionen für Frachtcontainer abgerufen werden und erleichtern die Auswertung der Sensordaten sowie die Erkennung von Fehlern in den Sensordaten und/oder bei der Auswertung dieser. Insbesondere kann anhand dieser Informationen eine aus den Scandaten ermittelte 3D-Punktwolke, welche den jeweiligen Frachtcontainer abbilden soll, einem Plausibilitätstest unterzogen werden. Bei einer Unvereinbarkeit mit den jeweiligen Informationen, kann beispielsweise eine Fehlermeldung ausgegeben werden und/oder eine Korrektur vorgenommen werden. Auch kann in diesem Zuge die digitalisierte Gestalt des Frachtcontainers überprüft werden.

Erfindungsgemäß umfasst ein Containerkran, insbesondere in Gestalt eines RTG-Krans, eines RXG-Krans oder eines Ship-to-Shore-Krans, zur Verfrachtung von Frachtcontainern, eine Hub- und Senkeinrichtung zum Anheben und Absenken von Frachtcontainern und ein zuvor beschriebenes Containerprüfsystem. Die Hub- und Senkeinrichtung und das Containerprüfsystem sind derart aufeinander abgestimmt, dass die Hub- und Senkeinrichtung einen zu verfrachtenden Frachtcontainer derart in und/oder durch den Überwachungsbereich der Sensoreinheit des Containerprüfsystems verfährt, dass die Sensoreinheit die gesamte Unterseite des jeweiligen Frachtcontainers scannt.

Dies erlaubt der Auswerteeinheit die oben beschriebene Analyse der Unterseite des Frachtcontainers und insbesondere die Identifizierung von nicht entfernen Twist-Lock an dieser.

Ein erfindungsgemäßes Verfahren zum Überprüfen eines Frachtcontainers, insbesondere mit einem zuvor beschriebenen Containerprüfsystem oder Containerkran, umfasst die folgenden Schritte: die Erzeugung von Sensordaten, welche zumindest die gesamte Unterseite des Frachtcontainers abdecken; die Auswertung der erzeugten Sensordaten zur Identifizierung von strukturellen Unstimmigkeiten der Unterseite des jeweiligen Frachtcontainers, insbesondere von Twist-Locks an dieser.

Das Scannen der gesamten Unterseite des Frachtcontainers ermöglicht die zuverlässige Bestimmung von Unstimmigkeiten, insbesondere in Gestalt von nicht entfernten Twist-Locks, an der Unterseite des Frachtcontainers.

Nachfolgend wird die Erfindung rein beispielhaft unter Bezugnahme auf die beiliegende Zeichnung beschrieben. Diese zeigt schematisch den Aufbau und die Funktionsweise einer erfindungsgemäßen Ausgestaltung.

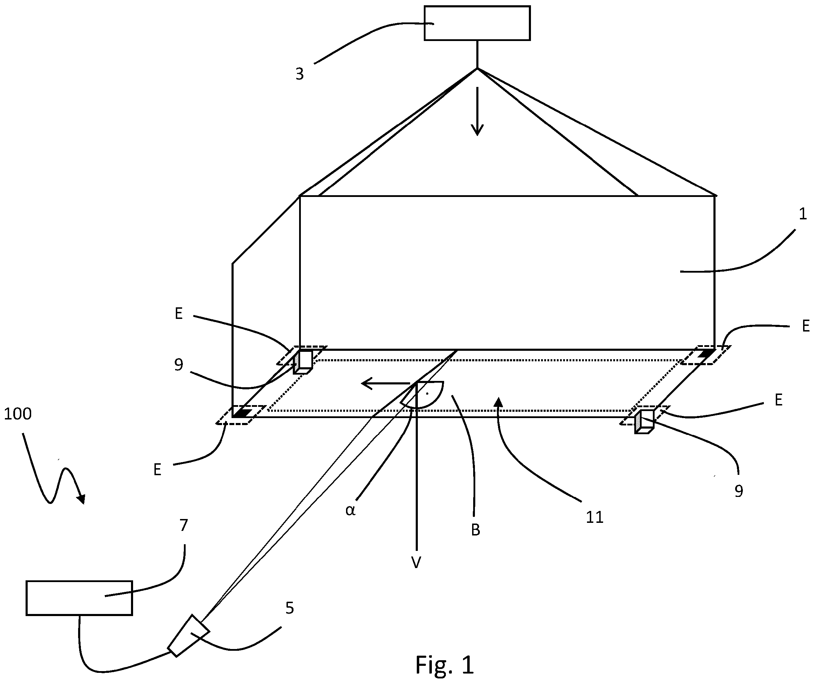

Fig. 1 zeigt einen Frachtcontainer 1, welcher von einer Hub- und Senkreinrichtung 3 gehalten wird und dessen Unterseite im Überwachungsbereich einer Sensoreinheit 5 eines erfindungsgemäßen Containerprüfsystems 100 liegt.

Konkret handelt es sich bei der gezeigten Sensoreinheit 5 um einen 2D-LiDAR-Sensor. Dieser ist um einen Winkel α gegenüber der Vertikalen V als angenommene Absetzrichtung und Normale einer Bodenfläche B des Frachtcontainers 1 verkippt. Der Winkel α ist kleiner als 90°. Damit bildet die dargestellte Sensoreinheit 5 lediglich einen Bruchteil der Unterseite des Frachtcontainers 1 ab.

Während einem Absenken (oder Anheben) des Frachtcontainers 1 durch die Hub- und Senkeinrichtung 3 (siehe den Pfeil nach unten) wandert der Überwachungsbereich der Sensoreinheit 5 entlang der Unterseite des Frachtcontainers 1 (siehe den Pfeil nach links). Dies erlaubt es der unbewegten Scaneinheit die gesamte Unterseite des Frachtcontainers 1 zu scannen. Dies ist alternativ auch dadurch zu erreichen, dass der Frachtcontainer 1 horizontal durch den Überwachungsbereich der Sensoreinheit 5 bewegt wird. Auch wäre es möglich die Sensoreinheit relativ zu dem Frachtcontainer 1 (insbesondere vertikal oder horizontal) zu bewegen oder die Sensoreinheit 5 als 2D-Scanner mit einer Ablenkeinheit, als 3D-Scanner oder als 4D-Scanner auszubilden und (bevorzugt ohne gleichzeitige Bewegung des Frachtcontainers 1) die Unterseite des Frachtcontainers scannen zu lassen.

Die Sensoreinheit 5 ist mit einer Auswerteeinheit 7 verbunden. Die Auswerteeinheit 7 ist dazu ausgebildet, die Sensordaten der Sensoreinheit 5 zu erhalten und zu analysieren. Konkret ist die Auswerteeinheit 7 beispielsweise dazu ausgebildet, die Sensordaten, welche die Sensoreinheit 5 während eines Scannens der Unterseite des Frachtcontainers 1 generiert und ausgegeben hat, zusammenzusetzen und hieraus eine 3D-Punktewolte zu generieren. Hierfür kann die Auswerteeinheit 7 mit einer Bewegungsüberwachungseinheit (nicht dargestellt), beispielsweise einem Encoder der Hub- und Senkeinrichtung 3 gekoppelt sein. Insbesondere bei 2D-Sensoren für die Sensoreinheit 5 kann solch eine Bewegungsüberwachungseinheit zur Bildung einer entsprechenden 3D-Puntkewolke von Vorteil sein. Auch ist es möglich, dass die Auswerteeinheit 7 Zugriff auf andere Rahmenbedingungen hat, welche ihr die korrekte Bildung der 3D-Punktewolke ermöglichen. Beispielsweise kann die Festlegung, dass der Frachtcontainer quaderförmig ist, durch die Auswerteeinheit 7 dahingehend verwendet werden, dass bei der gebildeten 3D-Punktewolke Scherungen minimiert werden. Auch zulässige Dimensionen und/oder Verhältnisse von Seitenlängen können durch die Auswerteeinheit 7 als Korrektiv bei der Bildung der 3D-Punktewolke verwendet werden. Auch können entsprechende Informationen zur Erkennung von Fehlern oder Problemen in den Scandaten dienen.

Erfindungsgemäß ist es wesentlich, dass die besagte 3D-Punktewolke auch tatsächlich die gesamte Unterseite des Frachtcontainers 1 abbildet. Dies bezieht sich konkret auf die gesamte Ausdehnung der Unterseite des Frachtcontainers 1. Schattenbereiche sind hierbei wohl zulässig, aber über eine möglichst steile Ausrichtung der Sensoreinheit 5 auf die Unterseite des Frachtcontainers 1 möglichst klein zu halten. Es ist dabei möglich, dass die generierte 3D-Punktewolke auch Bereiche der Seitenwände des Frachtcontainers 1 umfasst. Solche können zur Korrektur der 3D-Punktewolke herangezogen werden, sind für die vorliegende Erfindung aber nicht wesentlich.

Aufgabe der vorgesehenen Auswerteeinheit 7 ist es, anhand der Scandaten von der Sensoreinheit 5, also vorliegend aus der hieraus generierten 3D-Punktewolke, strukturelle Unstimmigkeiten, beispielsweise in Gestalt von nicht entfernten Twist-Locks 9 an der Unterseite des Frachtcontainers 1, zu identifizieren.

Dies kann beispielsweise dadurch erfolgen, dass die Auswerteeinheit 7 aus den Sensordaten, vorliegend in Gestalt der 3D-Punktewolke, die Erstreckungsebene der Bodenfläche 11 des Frachtcontainers 1 ermittelt. Hierfür kann die Auswerteeinheit 7 nur einen Teil der erzeugten 3D-Punktewolke berücksichtigen, welcher eindeutig der Bodenfläche 11 zugeordnet ist.

Geht es beispielsweise primär um die Identifizierung nicht entfernter Twist-Locks in den Ecken der Bodenfläche 11, ist es zur Bestimmung der Erstreckungsebene der Bodenfläche 11 sinnvoll, die Messpunkte aus den Eckbereichen der Unterseite des Frachtcontainers 1 nicht zu berücksichtigen. Auch die Randbereiche der Unterseite jenseits der Ecken (also entlang der Seitenkanten der Bodenfläche) bei der Bestimmung der Erstreckungsebene der Bodenfläche 11 unberücksichtigt zu lassen, ermöglicht bessere Ergebnisse hierbei. In Fig. 1 ist ein Beispiel für einen entsprechenden Bestimmungsbereich B eingezeichnet.

Unter der Annahme, dass die Erstreckungsebene der Bodenfläche 11 im Allgemeinen weitestgehend horizontal verläuft (weil Frachtcontainer 1 möglichst waagrecht verfrachtet werden), kann sich die Bestimmung der Erstreckungsebene auf die Bestimmung einer Bezugshöhe beschränken. Bei einem Frachtcontainer 1, dessen Höhe während des Scans seiner Unterseite konstant bleibt, kann diese Bezugshöhe beispielsweise einer relativen (in Bezug auf die Sensoreinheit) oder einer absoluten (beispielsweise in Bezug auf das Bodenniveau) Höhe entsprechen.

Die Identifizierung von Unstimmigkeiten, insbesondere in Gestalt von nicht entfernten Twist-Locks, erfolgt dann anhand eines Abgleichs der Positionen einzelner Messpunkte mit der Erstreckungsebene der Bodenfläche 11. Konkret kann die Auswerteeinheit 7 den Abstand aller Messpunkte zur Unterseite des Frachtcontainers 1 von der ermittelten Erstreckungsebene des Bodenfläche 11 (also vertikal zu dieser entlang ihrer Flächennormale) bestimmen und mit einem Schwellenwert abgleichen. Liegt der Abstand eines Messpunkts oberhalb dieses Schwellenwerts, kann die Auswerteeinheit 7 ein entsprechendes Signal ausgeben. Bevorzugt ist der Ausgabe des Signals noch eine weitere Bedingung vorgeschaltet. Beispielsweise gibt die Auswerteeinheit 7 ein entsprechendes Signal lediglich aus, wenn für mehrere Messpunkte in einem zusammenhängenden Bereich, insbesondere in einem Bereich mit einer vordefinierten Ausdehnung (beispielsweise entsprechend nicht entfernter Twist-Locks), der Schwellenwert überschritten wird. Dies erlaubt es, Sensorrauschen oder Messfehler herauszufiltern. Als Schwellenwert kann ein festgelegter Wert oder ein variabler Wert, beispielsweise in Gestalt eines Vielfachen einer Standardabweichung bei der Ermittlung der Erstreckungsebene der Bodenfläche 11 verwendet werden.

Beispielsweise wird ein Mittelwert für die Höhe der Bodenfläche 11 des Frachtcontainers 1 und die zugehörige Standardabweichung ermittelt. Die besagte Standardabweichung ist ein Maß für das Sensorrauschen und/oder für Messfehler und die durchschnittliche Unebenheit der Bodenfläche 11 des Frachtcontainers 1 (beispielsweise bei einer gerillten Außenwand des Frachtcontainers) sofern die Strukturgröße größer als der Messfehler ist. Nachfolgend wird analysiert, ob es entlang der Unterseite des Frachtcontainers bestimmte Bereiche gibt, in welche die einzelnen Messpunkte um mehr als beispielsweise das 5-Fache dieser Standardabweichung als Schwellenwert von der Erstreckungsebene der Bodenfläche 11 entfernt liegen (also eine entsprechend niedrigere Höhe aufweisen). Sollte dies der Fall sein, kann die Auswerteeinheit ein Signal ausgeben, welches die Erkennung einer entsprechenden Unstimmigkeit anzeigt.

Bei der besagten Auswertung der einzelnen Messpunkte in Bezug auf die ermittelte Erstreckungsebene der Bodenfläche 11 kann es besonders effizient sein, lediglich Messpunkte aus bestimmten Teilbereichen der Unterseite des Frachtcontainers 1 zu betrachten. Wenn es beispielsweise lediglich um die Identifizierung von nicht entfernten Twist-Locks geht, reicht es üblicherweise aus, lediglich die Messpunkte in den Eckbereichen E der Unterseite des Frachtcontainers 1 zu analysieren.

Abschließend sei darauf hingewiesen, dass es sich bei der oben beschriebenen Ausgestaltung lediglich um eine beispielhafte Ausführungsform handelt. Es gibt eine Vielzahl von Möglichkeiten, von dieser Ausgestaltung abzuweisen, ohne von dem Schutzbereich der beiliegenden Ansprüche abzuweichen.

Beispielsweise können anstatt einer Sensoreinheit 5 mit nur einem 2D-Sensor bzw. -Scanner oder 3D-Sensor bzw. -Scanner auch Sensoreinheiten 5 mit zwei oder mehr 2D- und/oder 3D-Sensoren vorgesehen werden. Bei den vorgesehenen Sensoren der Sensoreinheit 5 kann es sich um LiDAR-Sensoren, Radar-Sensoren und/oder verwandte Ausgestaltungen handeln. Bei der beschriebenen Bewegungsüberwachungseinheit kann es sich um Komponenten anderer Vorrichtungen, wie der Hub- und Senkeinrichtung 3, handeln oder um weitere Sensoren der Sensoreinheit 5, beispielsweise um einfache 1D-Abstandssensoren oder 1D-FMCW-LiDAR-Sensoren die über die Radialgeschwindigkeitsmessung die Absetzgeschwindigkeit des Containers vermessen. Auch kann die Auswerteeinheit 7 dazu ausgebildet sein, selbständig unmittelbar aus den Sensordaten der Sensoreinheit 5 auf entsprechende Positions- und/oder Bewegungsinformationen zu schließen. Im Falle eines FMCW-Sensors, insbesondere bei Einsatz eines 4D-(Mehrlagen-)FMCW-Lidar-Sensors zum Erfassen der Unterseite des Frachtcontainers 1, kann die Absenkgeschwindigkeit mit Hilfe von Messdaten des FMCW-Sensors ermittelt werden. Eine zusätzliche Systeminformation aus der Hub- und Senkeinrichtung 3 wäre dann hinfällig. Die Unterseite des Frachtcontainers 1 kann gescannt werden, während dieser weitestgehend unbewegt ist (beispielsweise durch einen bewegten oder unbewegten 3D-Scanner oder durch einen bewegten 2D-Scanner). Auch kann der Frachtcontainer 1 eine gezielte Bewegung (beispielsweise vertikal und/oder horizontal oder gar rotativ - bevorzugt um die Vertikale) durchführen, während dessen Unterseite gescannt wird.

### Bezugszeichenliste

- 1: Frachtcontainer
- 3: Hub- und Senkreinrichtung
- 5: Sensoreinheit
- 7: Auswerteeinheit
- 9: Twist-Lock
- 11: Bodenfläche / Erstreckungsebene
- 100: Containerprüfsystem

- α: Winkel
- B: Bestimmungsbereich
- E: Eckbereich
- V: Vertikale

## Patentansprüche

1. Containerprüfsystem (100) zur Überprüfung des Zustands eines Frachtcontainers (1), wobei das Containerprüfsystem (100) umfasst:
eine Sensoreinheit (5), welche dazu ausgebildet ist, Sensordaten zu einem Frachtcontainer (1), welcher sich innerhalb des Überwachungsbereichs der Sensoreinheit (5) aufhält, zu generieren; und
eine Auswerteeinheit (7), welche dazu ausgebildet ist, aus den so generierten Sensordaten spezifische Informationen zu dem Frachtcontainer (1) zu extrahieren;
**dadurch gekennzeichnet, dass**
die Sensoreinheit (5) dazu ausgebildet ist, Sensordaten zur gesamten Unterseite eines Frachtcontainers (1) zu generieren, während sich dieser in dem Überwachungsbereich der Sensoreinheit (5) befindet und/oder während dieser den Überwachungsbereich der Sensoreinheit (5) in einer vorgegebenen Bewegungsrichtung passiert,
wobei die Auswerteeinheit (7) dazu ausgebildet ist, anhand der generierten Sensordaten strukturelle Unstimmigkeiten der Unterseite des jeweiligen Frachtcontainers (1), insbesondere Twist-Locks, zu identifizieren und ein entsprechendes Signal auszugeben.

2. Containerprüfsystem (100) nach Anspruch 1,
wobei die Sensoreinheit (5) wenigstens, insbesondere genau, einen 2D-Scanner, beispielsweise einen 2D-LiDAR-Sensor, umfasst, wobei der ebene Überwachungsbereich des besagten 2D-Scanners in einem Winkel (α) kleiner 90° auf die erwartete Normale (V) der Unterseite des Frachtcontainers (1) beim Passieren des Überwachungsbereichs ausgerichtet ist, wobei die Auswerteeinheit (7) dazu ausgebildet ist, die Bewegung des Frachtcontainers beim Passieren des Überwachungsbereichs des 2D-Scanners zu überwachen und aus den jeweiligen Einzelmessungen oder Mehrlagenmessungen und/oder kombinierten Sensordaten während dem Passieren des Überwachungsbereichs die Gestalt der Unterseite des jeweiligen Frachtcontainers (1) zu rekonstruieren.

3. Containerprüfsystem (100) nach Anspruch 1 oder 2,
wobei die Sensoreinheit (5) wenigstens, insbesondere genau, einen 3D-Scanner, insbesondere einen 3D-LiDAR-Sensor oder einen 4D-FMCW-LiDAR Sensor, umfasst,
wobei die Auswerteeinheit (7) dazu ausgebildet ist, aus wenigstens, insbesondere genau, einem Scan der Unterseite des Frachtcontainers (1) die Gestalt der Unterseite des jeweiligen Frachtcontainers (1) zu ermitteln.

4. Containerprüfsystem (100) nach einem der vorangehenden Ansprüche, wobei die Auswerteeinheit (7) mit einer Bewegungsüberwachungseinheit, welche Positions- und/oder Bewegungsinformationen zu dem jeweiligen Frachtcontainer (1) ausgibt, gekoppelt ist oder zumindest koppelbar ist, wobei die Auswerteeinheit (7) dazu ausgebildet ist, die so erhaltenen Positions- und/oder Bewegungsinformationen bei der Auswertung der Sensordaten zu berücksichtigen.

5. Containerprüfsystem (100) nach einem der vorangehenden Ansprüche, wobei die Sensoreinheit (5) wenigstens, insbesondere genau, einen 2D- oder 3D-Abstandssensor umfasst und die Auswerteeinheit (7) dazu ausgebildet ist, aus den Sensordaten der Sensoreinheit (5) eine 3D-Punktewolke zu erzeugen, welche die dreidimensionale Ausgestaltung zumindest der Unterseite des jeweiligen Frachtcontainers (1) abbildet.

6. Containerprüfsystem (100) nach einem der vorangehenden Ansprüche, wobei die Auswerteeinheit (7) dazu ausgebildet ist, aus den Sensordaten zur Unterseite des jeweiligen Frachtcontainers (1) die Erstreckungsebene der Bodenfläche (11) des jeweiligen Frachtcontainers (1) zu ermitteln.

7. Containerprüfsystem (100) nach Anspruch 6,
wobei die Auswerteeinheit (7) dazu ausgebildet ist, bei der Ermittlung der Erstreckungsebene der Bodenfläche (11) lediglich einen Teil der Sensordaten zur Unterseite des jeweiligen Frachtcontainers (1), insbesondere ohne Sensordaten zu einem Randbereich der Unterseite des Frachtcontainers (1), bevorzugt zumindest ohne die Ecken der Unterseite des Frachtcontainers (1), zu berücksichtigen.

8. Containerprüfsystem (100) nach Anspruch 6 oder 7,
wobei die Auswerteeinheit (7) dazu ausgebildet ist, die Erstreckungsebene der Bodenfläche (11) über einen Aufhängepunkt und eine Flächennormale zu definieren,
wobei die Auswerteeinheit (7) insbesondere dazu ausgebildet ist, als Flächennormale die Vertikale (V) und als Aufhängepunkt lediglich den Mittelwert einer relativen Höhe der Bodenfläche (11) zu verwenden.

9. Containerprüfsystem (100) nach einem der vorangehenden Ansprüche, wobei die Auswerteeinheit (7) ferner dazu ausgebildet ist, Unebenheiten, insbesondere lokal begrenzte Erhebungen, beispielsweise in Gestalt von Twist-Locks, an der Unterseite des jeweiligen Frachtcontainers (1) zu identifizieren und ein entsprechendes Signal auszugeben,
wobei ein entsprechendes Signal lediglich ausgegeben wird, wenn die Dimensionen der identifizierten Erhebungen ein festgelegtes Ausmaß in Bezug auf eine oder die identifizierte Erstreckungsebene der Bodenfläche (11) des jeweiligen Frachtcontainers (1) überschreiten.

10. Containerprüfsystem (100) nach Anspruch 9,
wobei die Auswerteeinheit (7) dazu ausgebildet ist, lediglich einen oder mehrere bestimmte Bereiche der Unterseite des jeweiligen Frachtcontainers (1), insbesondere die Randbereich der Unterseite des Frachtcontainers, bevorzugt lediglich die Ecken der Unterseite des jeweiligen Frachtcontainers (1), auf entsprechende Vorsprünge hin zu untersuchen.

11. Containerprüfsystem (100) nach Anspruch 9 oder 10,
wobei die Auswerteeinheit (7) dazu ausgebildet ist, ein statistisches Maß, insbesondere die Standardabweichung, der Sensordaten zur Unterseite des jeweiligen Frachtcontainers (1) in Bezug auf die Erstreckungsebene der Bodenfläche (11) des jeweiligen Frachtcontainers (1) zu ermitteln und als Schwellenwert für die Auslösung des Signals ein Vielfaches, insbesondere das 3-Fache bis 20-Fache, bevorzugt das 5-Fache, das 10-Fache oder das 15-Fache, dieser Standardabweichung zu verwenden.

12. Containerprüfsystem (100) nach Anspruch 9 oder 10,
wobei die Auswerteeinheit (7) dazu ausgebildet ist, als Schwellenwert für die Auslösung des Signals einen festgelegten Wert zu verwenden, welcher systembedingt oder empirisch zur Identifizierung speziellen Erhebungen, insbesondere in Gestalt von Twist-Locks, bestimmt ist.

13. Containerprüfsystem (100) nach einem der vorangehenden Ansprüche, wobei die Auswerteeinheit (7) dazu ausgebildet ist, bei der Überprüfung des jeweiligen Frachtcontainers (1) auf Informationen zurückzugreifen, welche die zu erwartenden Formen und/oder Dimensionen des jeweiligen Frachtcontainers (1) anzeigen.

14. Containerkran, insbesondere RTG-Kran, RXG-Kran oder Ship-to-Shore-Kran, zur Verfrachtung von Frachtcontainern (1), wobei der Containerkran eine Hub- und Senkeinrichtung (3) zum Anheben und Absenken von Frachtcontainern (1) und ein Containerprüfsystem (100) nach einem der vorangehenden Ansprüche umfasst,
wobei die Hub- und Senkeinrichtung (3) und das Containerprüfsystem (100) derart aufeinander abgestimmt sind, dass die Hub- und Senkeinrichtung (3) einen zu verfrachtenden Frachtcontainer (1) derart in und/oder durch den Überwachungsbereich der Sensoreinheit (5) des Containerprüfsystems (100) verfährt, dass die Sensoreinheit (5) die gesamte Unterseite des jeweiligen Frachtcontainers (1) scannt.

15. Verfahren zum Überprüfen eines Frachtcontainers (1), insbesondere mit einem Containerprüfsystem (100) oder einem Containerkran nach einem der vorangehenden Ansprüche, wobei das Verfahren die folgenden Schritte umfasst:
die Erzeugung von Sensordaten, welche zumindest die gesamte Unterseite des Frachtcontainers (1) abdecken;
die Auswertung der erzeugten Sensordaten zur Identifizierung von strukturellen Unstimmigkeiten der Unterseite des jeweiligen Frachtcontainers (1), insbesondere von Twist-Locks (9).

## Geänderte Patentansprüche

### Geänderte Patentansprüche gemäss Regel 137(2) EPÜ.

1. Containerprüfsystem (100) zur Identifizierung von nicht entfernten Twist-Locks (9) an der Unterseite eines Frachtcontainers (1), wobei das Containerprüfsystem (100) umfasst:
eine Sensoreinheit (5), welche dazu ausgebildet ist, Sensordaten zu einem Frachtcontainer (1), welcher sich innerhalb des Überwachungsbereichs der Sensoreinheit (5) aufhält, zu generieren; und
eine Auswerteeinheit (7), welche dazu ausgebildet ist, aus den so generierten Sensordaten spezifische Informationen zu dem Frachtcontainer (1) zu extrahieren;
wobei die Sensoreinheit (5) dazu ausgebildet ist, Sensordaten zur gesamten Unterseite eines Frachtcontainers (1) zu generieren, während sich dieser in dem Überwachungsbereich der Sensoreinheit (5) befindet und/oder während dieser den Überwachungsbereich der Sensoreinheit (5) in einer vorgegebenen Bewegungsrichtung passiert,
**dadurch gekennzeichnet, dass**
wobei die Auswerteeinheit (7) dazu ausgebildet ist, aus den Sensordaten der Sensoreinheit (5) eine 3D-Punktewolke zu erzeugen, welche die dreidimensionale Ausgestaltung zumindest der Unterseite des jeweiligen Frachtcontainers (1) abbildet,
wobei die Auswerteinheit (7) ferner dazu ausgebildet ist, anhand der generierten 3D-Punktewolke Twist-Locks (9) an der Unterseite des jeweiligen Frachtcontainers (1) zu identifizieren und ein entsprechendes Signal auszugeben.

2. Containerprüfsystem (100) nach Anspruch 1,
wobei die Sensoreinheit (5) wenigstens, insbesondere genau, einen 2D-Scanner, beispielsweise einen 2D-LiDAR-Sensor, umfasst, wobei der ebene Überwachungsbereich des besagten 2D-Scanners in einem Winkel (α) kleiner 90° auf die erwartete Normale (V) der Unterseite des Frachtcontainers (1) beim Passieren des Überwachungsbereichs ausgerichtet ist, wobei die Auswerteeinheit (7) dazu ausgebildet ist, die Bewegung des Frachtcontainers beim Passieren des Überwachungsbereichs des 2D-Scanners zu überwachen und aus den jeweiligen Einzelmessungen oder Mehrlagenmessungen und/oder kombinierten Sensordaten während dem Passieren des Überwachungsbereichs die Gestalt der Unterseite des jeweiligen Frachtcontainers (1) zu rekonstruieren.

3. Containerprüfsystem (100) nach Anspruch 1 oder 2,
wobei die Sensoreinheit (5) wenigstens, insbesondere genau, einen 3D-Scanner, insbesondere einen 3D-LiDAR-Sensor oder einen 4D-FMCW-LiDAR-Sensor, umfasst,
wobei die Auswerteeinheit (7) dazu ausgebildet ist, aus wenigstens, insbesondere genau, einem Scan der Unterseite des Frachtcontainers (1) die besagte 3D-Punktewolke zu erzeugen.

4. Containerprüfsystem (100) nach einem der vorangehenden Ansprüche, wobei die Auswerteeinheit (7) mit einer Bewegungsüberwachungseinheit, welche Positions- und/oder Bewegungsinformationen zu dem jeweiligen Frachtcontainer (1) ausgibt, gekoppelt ist oder zumindest koppelbar ist, wobei die Auswerteeinheit (7) dazu ausgebildet ist, die so erhaltenen Positions- und/oder Bewegungsinformationen bei der Erzeugung der besagten 3D-Punktewolke zu berücksichtigen.

5. Containerprüfsystem (100) nach einem der vorangehenden Ansprüche, wobei die Sensoreinheit (5) wenigstens, insbesondere genau, einen 2D- oder 3D-Abstandssensor umfasst.

6. Containerprüfsystem (100) nach einem der vorangehenden Ansprüche, wobei die Auswerteeinheit (7) dazu ausgebildet ist, aus der besagten 3D-Punktewolke die Erstreckungsebene der Bodenfläche (11) des jeweiligen Frachtcontainers (1) zu ermitteln.

7. Containerprüfsystem (100) nach Anspruch 6,
wobei die Auswerteeinheit (7) dazu ausgebildet ist, bei der Ermittlung der Erstreckungsebene der Bodenfläche (11) lediglich einen Teil der besagten 3D-Punktewolke, insbesondere ohne Punkten zu einem Randbereich der Unterseite des Frachtcontainers (1), bevorzugt zumindest ohne Punkten zu den Ecken der Unterseite des Frachtcontainers (1), zu berücksichtigen.

8. Containerprüfsystem (100) nach Anspruch 6 oder 7,
wobei die Auswerteeinheit (7) dazu ausgebildet ist, die Erstreckungsebene der Bodenfläche (11) über einen Aufhängepunkt und eine Flächennormale zu definieren,
wobei die Auswerteeinheit (7) insbesondere dazu ausgebildet ist, als Flächennormale die Vertikale (V) und als Aufhängepunkt lediglich den Mittelwert einer relativen Höhe der Bodenfläche (11) zu verwenden.

9. Containerprüfsystem (100) nach einem der vorangehenden Ansprüche, wobei die Auswerteeinheit (7) dazu ausgebildet ist, Twist-Locks (9) als lokal begrenzte Erhebungen an der Unterseite des jeweiligen Frachtcontainers (1) zu identifizieren, wenn die Dimensionen der identifizierten Erhebungen ein festgelegtes Ausmaß in Bezug auf eine oder die identifizierte Erstreckungsebene der Bodenfläche (11) des jeweiligen Frachtcontainers (1) überschreiten.

10. Containerprüfsystem (100) nach Anspruch 9,
wobei die Auswerteeinheit (7) dazu ausgebildet ist, lediglich einen oder mehrere bestimmte Bereiche der Unterseite des jeweiligen Frachtcontainers (1), insbesondere die Randbereiche der Unterseite des Frachtcontainers, bevorzugt lediglich die Ecken der Unterseite des jeweiligen Frachtcontainers (1), auf entsprechende Erhebungen hin zu untersuchen.

11. Containerprüfsystem (100) nach Anspruch 9 oder 10,
wobei die Auswerteeinheit (7) dazu ausgebildet ist, ein statistisches Maß, insbesondere die Standardabweichung, der besagten 3D-Punktewolke in Bezug auf die Erstreckungsebene der Bodenfläche (11) des jeweiligen Frachtcontainers (1) zu ermitteln und als Schwellenwert für die Identifizierung eines Twist-Locks (9) ein Vielfaches, insbesondere das 3-Fache bis 20-Fache, bevorzugt das 5-Fache, das 10-Fache oder das 15-Fache, dieser Standardabweichung zu verwenden.

12. Containerprüfsystem (100) nach Anspruch 9 oder 10,
wobei die Auswerteeinheit (7) dazu ausgebildet ist, als Schwellenwert für die Identifizierung eines Twist-Locks (9) einen festgelegten Wert zu verwenden, welcher systembedingt oder empirisch bestimmt ist.

13. Containerprüfsystem (100) nach einem der vorangehenden Ansprüche, wobei die Auswerteeinheit (7) dazu ausgebildet ist, bei der Überprüfung des jeweiligen Frachtcontainers (1) auf Informationen zurückzugreifen, welche die zu erwartenden Formen und/oder Dimensionen des jeweiligen Frachtcontainers (1) anzeigen.

14. Containerkran, insbesondere RTG-Kran, RXG-Kran oder Ship-to-Shore-Kran, zur Verfrachtung von Frachtcontainern (1), wobei der Containerkran eine Hub- und Senkeinrichtung (3) zum Anheben und Absenken von Frachtcontainern (1) und ein Containerprüfsystem (100) nach einem der vorangehenden Ansprüche umfasst,
wobei die Hub- und Senkeinrichtung (3) und das Containerprüfsystem (100) derart aufeinander abgestimmt sind, dass die Hub- und Senkeinrichtung (3) einen zu verfrachtenden Frachtcontainer (1) derart in und/oder durch den Überwachungsbereich der Sensoreinheit (5) des Containerprüfsystems (100) verfährt, dass die Sensoreinheit (5) die gesamte Unterseite des jeweiligen Frachtcontainers (1) scannt.

15. Verfahren zum Überprüfen eines Frachtcontainers (1), insbesondere mit einem Containerprüfsystem (100) oder einem Containerkran nach einem der vorangehenden Ansprüche, wobei das Verfahren die folgenden Schritte umfasst:
die Erzeugung von Sensordaten, welche zumindest die gesamte Unterseite des Frachtcontainers (1) abdecken;
die Erzeugung einer 3D-Punktewolke, welche die dreidimensionale Ausgestaltung zumindest der Unterseite des jeweiligen Frachtcontainers (1) abbildet, aus den Sensordaten;
die Auswertung der erzeugten 3D-Punktewolke zur Identifizierung von nicht entfernten Twist-Locks (9) an der Unterseite des jeweiligen Frachtcontainers (1).
